# EUROPEAN PATENT APPLICATION

(11) **EP 2 966 851 A1**
(43) Date of publication of application: **13.01.2016**
(21) Application number: 15158650.0
(22) Date of filing: 11.03.2015
(51) Int. Cl.: H04N 5/222

(54) **Autonomous camera system for capturing sporting events**

(30) Priority: 11.03.2014 NL 2012399; 12.06.2014 US 201414302832
(71) Applicant: De Vroome Poort B.V., 2011 EM Haarlem (NL)
(72) Inventor: Van Kampen, Hendrik Cornelis, 2135 JZ Hoofddorp (NL); Bervoets, Alfonsus Maria, 2116 TN Bentveld (NL)
(74) Representative: De Vries & Metman

(57) **Abstract**

An autonomous camera system (1) is proposed for generating a video of a sporting event at a playing field (100). The system comprising at least one camera (11,12), such as a wide-angle camera, configured to capture at least a part of the playing field (100) and output a raw video stream (221,231) of the video captured playing field. A video analyzer (2)is configured to recognize and track an activity on the playing field (100) by analyzing the raw video stream (221,231) and to derive one or more parameters from the tracking of the activity to obtain parameter data (223,233). A parameter analyzer (3) is configured to filter the parameter data (223,233) based on one or more predefined computational rules (240) to obtain selection data indicative of one or more regions of interest on the playing field or in the raw video stream. The regions of interest may be used to control one or more controllable cameras (13,14) at the playing field (100) or generate a video summary (261).

## Description

### FIELD OF THE INVENTION

The present invention relates to camera systems for recording sporting events. More specifically the invention relates to a camera system for substantially autonomous recording of sporting events at playing fields.

### BACKGROUND

The idea of autonomous content generation in sports is known. It has led to the development of camera systems around, for example, soccer fields. Current systems typically use fixed cameras mounted on poles. Such systems are relatively straightforward. The problem, however, is that in order to cover the entire field, the viewing angle is too large to involve the viewer or allow a deep analysis of the action.

A known solution for focusing the content generating system on the action on the playing field is to use emitters worn by the players or placed inside a special ball in combination with sensors that locate them. This yields good results but it typically does not work autonomously: it needs to be activated by special equipment and works only then. Furthermore, if one or more of the sensors fail, the detection of the action on the playing field becomes inaccurate or impossible.

Another problem with known autonomous camera systems is that human post processing is typically required for making summaries of the captured sporting event. The complete process, including the post processing, is thus not fully autonomous.

There is a need for a camera system that can autonomously capture sporting events and generate summaries of the captured sporting events.

### SUMMARY OF THE INVENTION

A camera system is disclosed for substantially autonomous capturing of sporting events and generating video summaries of the captured sporting events.

According to an aspect of the disclosure an autonomous camera system is proposed for generating a video of a sporting event at a playing field. The system can comprise at least one camera, such as a wide-angle camera, configured to capture at least a part of the playing field and output a raw video stream of the video captured playing field. The system can further comprise a video analyzer comprising a first processor configured to recognize and track an area of activity on the playing field by analyzing the raw video stream and to derive one or more parameters from the tracking of the activity to obtain parameter data. The system can further comprise a parameter analyzer comprising a second processor configured to filter the parameter data based on one or more predefined computational rules to obtain selection data indicative of one or more regions of interest on the playing field or in the raw video stream.

According to another aspect of the invention a computer-implemented method is disclosed for generating a video of a sporting event at a playing field using an autonomous camera system. The method can comprise capturing at least a part of the playing field using at least one camera, such as a wide-angle camera, and outputting a raw video stream of the video captured playing field. The method can further comprise recognizing and tracking an area of activity on the playing field, using a first processor or a video encoder of a video analyzer, by analyzing the raw video stream. The method can further comprise deriving, by the first processor, one or more parameters from the tracking of the activity to obtain parameter data. The method can further comprise filtering the parameter data, using a second processor of a parameter analyzer, based on one or more predefined computational rules to obtain selection data indicative of one or more regions of interest on the playing field or in the raw video stream.

The area of activity may be recognized and tracked by detecting the presence of one or more players on the field. Alternatively or additionally the activity may be recognized and tracked by detecting areas of the playing field that are not used, from which it may be deducted that the areas other than the non-used areas are the areas of activity.

A raw video stream is a video stream from a camera. The raw video stream is input to the video analyzer and may be used as a source for selecting video fragments for a video summary. The raw video stream from the one or more cameras may be in any format, including uncompressed, compressed, and encoded by the camera. In the latter two examples the video analyzer may decompress and/or decode the raw video stream prior to further processing.

The video analyzer and the parameter analyzer may be implemented on one or more computer systems. If implemented on a single computer system, the first and second processor may be one and the same.

The parameters provide an indication of activity on the playing field. Examples of parameters are: an indication of a motion of one or more players on the playing field; a position on the playing field of the one or more players; a distance to the camera of the one or more players; a velocity of the one or more players; a direction of movement of the one or more players; an acceleration of the one or more players; a direction in which the one or more players are facing; and an amount of visible playing field. The parameters are digitized in computer readable format as parameter data.

Advantageously, the autonomous camera system produces, possibly in real-time, parameter data that can subsequently be used to generate a video summary and/or control one or more controllable cameras. When the parameter data is obtained, the parameter data may be used at any time to generate the video summary, possibly also in real-time.

The camera system can advantageously operate autonomously, i.e. no human intervention is required for the camera system to generate the video of the sporting event. The analysis of the raw video stream and deriving of the parameters are typically performed in autonomous processes in the video analyzer. The parameter data is typically used in the parameter analyzer in a further autonomous process to obtain the selection data. The selection data can subsequently be used to automatically control one or more controllable cameras at the playing field and/or automatically select video fragments to be included in a video summary.

The embodiment of claim 2 advantageously enables known computer vision software libraries, such as OpenCV, to be used for the generation of the parameters.

The embodiment of claim 3 advantageously enables a video encoder, which may be present to encode the raw video stream anyway, to be used for the generation of the parameters.

The embodiment of claim 4 advantageously enables use of computer and storage capacity in an external network, such as the cloud, thereby minimizing the equipment at a playing field.

The embodiment of claim 5 advantageously enables the generation of specific parameters for use in the determination of regions of interest.

The embodiment of claim 6 advantageously enables audio to be captured and used as an additional source for the generation of parameters.

The embodiment of claim 7 advantageously enables specific audio events to be used for the generation of parameters.

The embodiment of claim 8 advantageously enables specific computational rules for the selection of regions of interest.

The embodiment of claim 9 advantageously enables the parameter data and selection data to be correlated with the raw data stream when being processed non-real-time.

The embodiments of claims 10 and 17 advantageously enable the generation of a video summary from the raw video stream, possibly in real-time.

The embodiment of claim 11 advantageously enables the generation of the video summary non-real-time.

The embodiment of claim 12 advantageously enables images from one camera at a time to be used in the video summary, thereby avoiding multiple shots of a single action from different angles in the video summary.

The embodiments of claims 13 and 18 advantageously enable one or more additional cameras at the playing field to be controlled and the captured video from these cameras to be included in the video summary.

The embodiments of claims 14 and 19 advantageously enable the action on the field to be translated in to a heat-map for the location of ROIs on the playing field. The heat-map may be generated as a graphical bit map, from which the density of players may be derived by applying different pixel colors to different densities. Alternatively the heat-map may be generated in any other format, such as a numerical representation of the graphical heat-map indicating for different locations on the playing field the density of players.

The embodiments of claims 15 and 20 advantageously enable the camera system to automatically detect the start and end of a game, which information may be used for the generation of the video summaries. No human intervention is required to start and stop the generation of the video summaries.

According to another aspect of the invention a playing field is disclosed comprising one or elements of an autonomous camera system as described above.

The embodiment of claim 22 advantageously enables the detection of regions of interest in the form of activity near the goal to be based on the distance of the activity to the camera or the amount of activity near the camera.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to the drawings, in which:
Fig.1 shows a prior art hockey playing field;
Fig.2 shows a camera set-up at a playing field of an exemplary embodiment of the invention;
Fig.3 shows a video processing of an exemplary embodiment of the invention;
Fig.4 and Fig.5 show graphical representations of results of video processing of exemplary embodiments of the invention;
Fig.6 shows a graphical representation of parameter processing of an exemplary embodiment of the invention;
Fig.7 and Fig.8 show camera systems of exemplary embodiments of the invention; and
Fig.9 shows a block diagram illustrating an exemplary computer system.

### DETAILED DESCRIPTION

The camera system of the present invention may generate and analyze visual content autonomously, without any human intervention. The system is tailored to field sports, where the data are typically gathered from a field of play of standard dimensions and lay-out and typically follow certain patterns, such as the number of players in a game and certain positions.

In the following examples field hockey is used as an exemplary model system. The invention is not limited to field hockey and may be used for generating video of any sporting event that is based on a playing field, including water sports. Thus, where a reference to hockey is made any other field sport is applicable, mutatis mutandis.

The camera system may recognize the start of the hockey match and record the game until it ends. The camera system may identify where and when 'the action' is during the game in order to e.g. zoom in on it, produce a summary of the match and/or stream it to a server or to the Internet for use by trainers, coaches or any other interested party. After the game, the camera system may keep monitoring the field until a new match.

The output of the system may resemble match summaries shown on television sports shows but with the entire crew of cameramen and editors replaced by the autonomous camera system.

The camera system is designed based on the following characteristics. The camera system may be always on and typically requires no human intervention other than playing a game of hockey. The camera system may operate without a special hockey ball, emitters or sensors attached to players other than one or more cameras and possibly one or more microphones. The camera system may operate without human editing or post-processing of the video streams to create a match summary. The camera system may operate without manual uploading of the summary to a storage location. The camera system may be robust enough to handle small variations in field size and camera setup. The camera system may compensate for weather variations.

The camera system may include one or more microphones for the registration and processing of audio. Audio streams may be a useful complement to the system because they provide information about the status of the game: referee whistles, spectator excitement, player yells, dead time, altercations et cetera. The origin of a sound may be established using directional microphones and stereophonic analysis on audio streams. Audio streams are typically matched against video streams for congruence.

For a better understanding of how the camera system works, a basic explanation of how hockey works, especially regarding player positions and movements on the playing field (also known as the pitch) will be given in the following sections. Rules about player positions and movements may be used by the system as an input for determining areas of activity on the playing field.

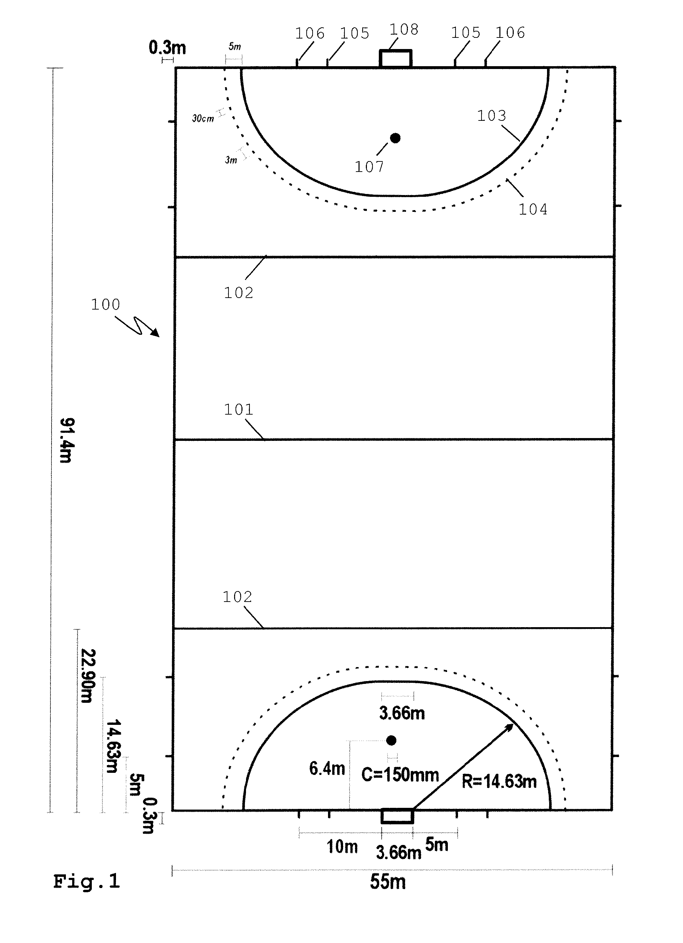

An example of a known hockey pitch is shown in Fig.1. Various dimensions are indicated in Fig.1. The hockey pitch 100 typically measures 91,4m by 55m. The pitch is divided in four sections by a center line 101 and two 22,9m lines 102. A shooting circle 103 indicates the area from where a shot at the goal 108 may be made. A penalty circle 104 indicates a boundary beyond which a penalty is taken. Penalty corner defender's mark 105 indicates the location where a defender may be positioned during a penalty corner. Penalty corner attacker's mark 106 indicates the location where an attacker may be positioned during a penalty corner. The penalty spot 107 indicates the location from where a penalty shot directly at the goal is taken.

The game is played between two teams with eleven players permitted on the pitch 100 at any one time. The teams will typically divide themselves into forwards, midfielders, and defenders with players frequently and fluidly moving between these lines with the flow of play. This fluidity may be reflected in game specific rules that the camera system may use to interpret action on the field. The game is played in two 35-minute halves with an interval of approximately 15 minutes. The teams change ends at halftime to even out any advantage gained in the first half due to wind direction, sun glare or other factors. Game time may be extended.

The goalkeeper holds a less formal position in hockey than in football. There are three options: (1) a full-time goalkeeper who wears a different color jersey and full protective kit; (2) a field player with goalkeeping privileges wearing a different color jersey when inside his or her team's defending area; (3) only field players: no player has goalkeeping privileges or wears a different color jersey. Because the goalkeeper gives valuable clues as to where the ball is, the camera system may recognize who the goalkeeper, if any at all, is and where he or she stands.

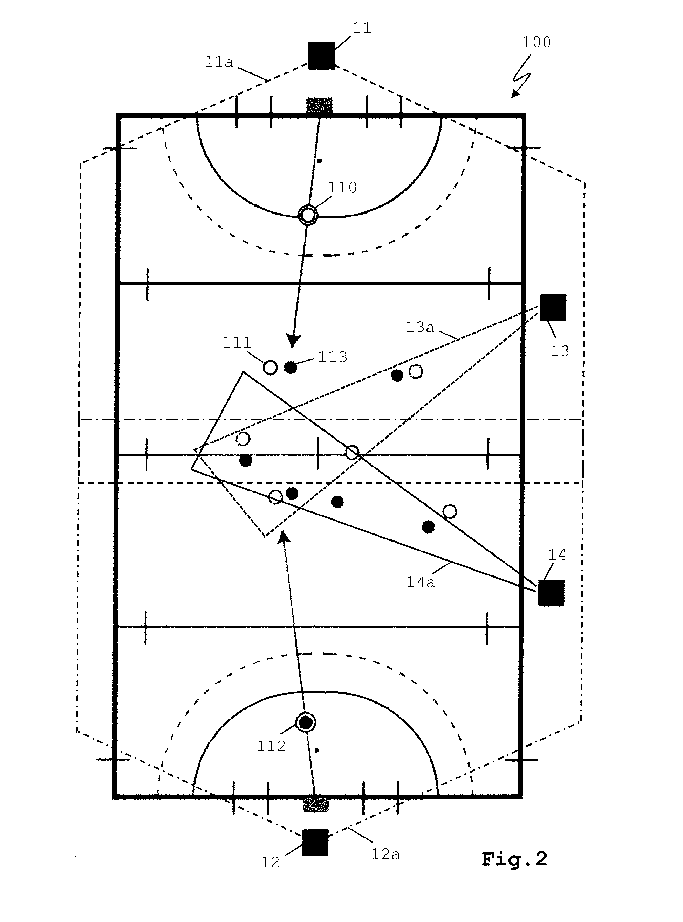

Fig.2 shows an exemplary camera set-up at a hockey pitch 100. In this example four cameras are installed: a camera 11,12 behind each of the goals and two controllable cameras 13,14 along the east flank. The cameras 11,12 typically have wide-angle lenses that cover the entire field, or at least a portion thereof. The cameras 11,12 may be mounted on poles behind the goals. The areas 11a,12a from the cameras 11,12, respectively, indicate exemplary coverage areas of these cameras. The controllable cameras 13,14 typically have zoom lenses and a narrow angle of vision and may record the action on the playing field in greater detail than the cameras 11,12. The areas 13a,14a from the controllable cameras 13,14, respectively, indicate an exemplary coverage of these cameras. The white dots 111 and black dots 113 represent players of the two opposing teams. The goalkeepers 110,112, marked with a double line, tend to stand between the ball and their respective goals, e.g. somewhere on the path indicated by the arrows.

The number of cameras 11,12 may vary depending on the size of the playing field and the type of camera used. The camera system includes at least one camera 11,12. Preferably, substantially the whole playing field is in view of the one or more cameras 11,12. The controllable cameras are optional. The number of controllable cameras may vary depending on the need to capture close-ups of the action at various locations of the playing field.

The camera system applies visual pattern recognition technology, e.g. based on computer-vision technology, on the raw video stream from the cameras 11,12 to recognize and track the players and goalkeepers on the pitch. This leads to a determination of regions of interests (ROI) indicative of where the action is on the playing field or indicative of interesting moments in the raw video stream. As a result the controllable cameras 13,14 may be panned, tilted and/or zoomed to take the viewer to the heart of the action. Alternatively or additionally the ROIs may be used for a selection of interesting moments from the raw video stream for making a summary.

The raw video streams from the four cameras 11-14 may be cut and pasted in an automatic process into a summary of the match: a succession of video fragments displaying the ROIs from the most appropriate angle (which may include streams shot from the cameras as well). The successive video fragments are typically in chronological order, but the system may recognize lulls in the game as such and drop them. This recognition of lulls may be assisted by a good 'understanding' of the game, based on a game-specific rule set.

The process to get from raw video streams (from the cameras 11,12) to the controlling of the controllable cameras 13,14 and/or the video summary of the sporting event will be explained in more detail below.

Preferably the camera system is self-calibrating on installation. This means that the system may be sufficiently robust as to recognize the location of its cameras with respect to the field 100 and identify the relevant elements of the field 100, such as shown in Fig.1 (exact dimensions, marks and lines, goals). The images from the controllable cameras 13,14 may be checked against an internal model of the field in order to establish their exact location and orientation (pan and tilt).

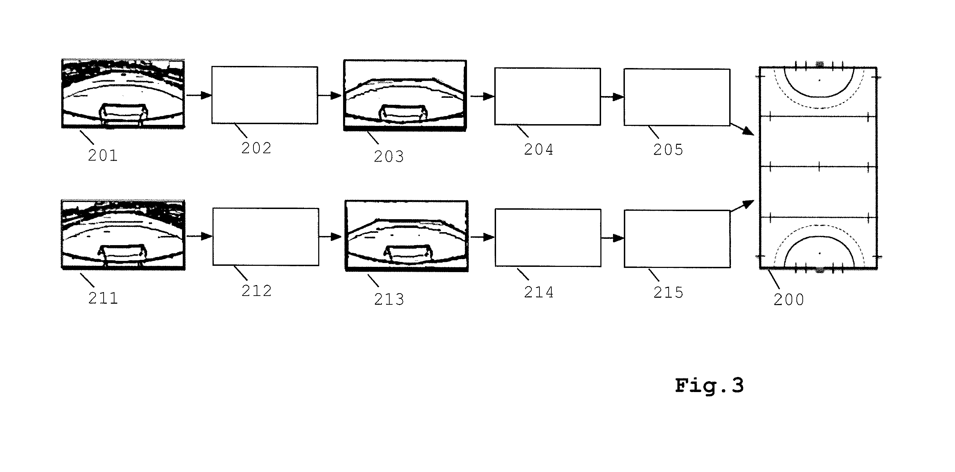

The internal model of the playing field 100 may be constructed as follows. The cameras typically record two-dimensional images from which to construct a three-dimensional model of the game. A fully three-dimensional model is not necessary because the game is essentially two-dimensional. But since the cameras are not perpendicular to the field and due to perspective and lens distortion, mapping algorithms may be applied to correct the images and reconstruct an orthogonal internal model of the field, such as illustrated in Fig.3.

In Fig.3 camera images 201,211 from each of the cameras 11,12 are used to construct an orthogonal internal model 200 of the playing field 100 in a number of steps. The orthogonal internal model 200 is a two-dimensional representation of the playing field, wherein elements outside of the playing field are substantially removed and wherein image distortion e.g. caused by a wide angled lens of the camera 11,12 is compensated for. Image 201 depicts an image from camera 11, e.g. a full color high definition image. The shape of the playing field 100 is recognized and the image is cropped in step 202, resulting in a cropped image 203, wherein parts of the image outside of the playing field are deleted. Lines on the playing field 100, such as the center line 101, the 22,9m lines 102 and the shooting circle 103, are detected in step 204 and an orthogonal mapping is performed in step 205. Similarly, for the image 211 from camera 12 the image 211 is cropped 212 and the cropped image 213 is line scanned 214 and orthogonally mapped. Lens characteristics, such as the focal length of the lens, may be used in the orthogonal mapping. The results after orthogonal mapping 205,215 are combined to construct the orthogonal internal model 200 of the playing field 100. In Fig.3 the internal model 200 is visualized as an image, but it may be stored in any other known data format.

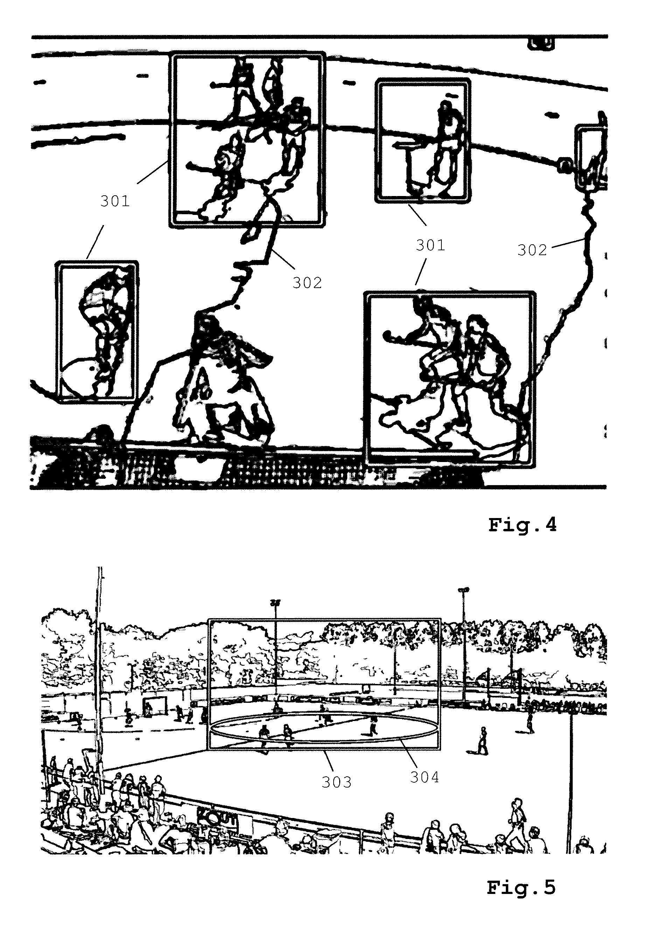

Whenever a player enters the field, he or she may be identified, tagged according to color and digitized for position, speed and acceleration. Variables such as the position, speed and acceleration of players may be computed and mapped onto the internal model 200 of the field. In Fig.4 a section of a single frame from the video stream of camera 11 is shown. The boxes 301 and wriggly lines 302 depict a graphical representation of the results of this computation and mapping. Boxes 301 identify players, lines 302 show recent trajectories of players. The identification, tagging and digitizing is a continuous process on the video stream and is not limited to a single frame.

To improve recognition and tracking of the players on the playing field, distortive visual elements in the video stream, such as shadows, rapid changes in light, changes in light intensity, changes in light direction, camera vibrations caused by wind and changes in weather conditions may be compensated or eliminated by automatic and possibly real-time video processing.

The camera system may pan, tilt and zoom a controllable camera 13,14 to generate footage such as contained by the rectangle 303 shown in Fig.5. The controllable camera 13,14 may be controlled to follow the ROI 304 indicated as an ellipse. Because the ROI 304 evolves in time, the rectangle 303 moves across the field too.

A game starts when twenty-two players, at least twenty of which wear jerseys in two different colors (ten for each color), are on the field with two referees. The players come together at the start of the game, after which a referee tosses a coin and the teams take up their positions. One of the referees whistles and one team opens the game. These actions all provide audio and/or visual markers indicating the start of a game. In order to be picked up and interpreted correctly by the camera system, these sequences may be described in the game-specific rule set. Although fairly standard, there will always be variation in the opening sequence (as well as in the number of players identified). The camera system allows for such variation. The end of the game is identified by keeping track of the playing time and observing the wind-down and salutation sequence after the match. Either one (or any other marker in the rule set) may be able to overrule the other.

Obviously, the one region of everybody's interest is the ball. Unfortunately the ball is small and moves fast. It is difficult to follow optically as it quickly moves from one side of the field to another. Neither is it always possible to see the ball among the players. But careful observation of the players in combination with a good understanding of the game provides additional, if not sufficient, clues as to where the ROI is.

One set of clues for the ROIs may be gathered from the direction the players are facing or moving. Quantities such as speed, acceleration and density of the players, may be measured or derived from the video stream and may be used to produce something akin to a 'heat map' of activity. Plotting the density of the players and the intensity of their motions onto the pitch in the form of a heat map yields an indication of the ROI.

Another set of clues for the ROIs may come from the goalkeepers. They will tend to move along with the ball, or at least stand in the direction from which they expect it to come at the goal. The two goalkeepers, however, will generally not mirror each other, and the value of this parameter will vary with the distance from the ball and the nature and intensity of the action. The camera system may correct for that by assigning this parameter a weighing factor that decreases with distance and intensity.

Another indicator of where the ROI is, may be derived from the referees' positions and motion parameters. The referees' judgment as to where the ROI is, provides valuable clues as to where to point the controllable cameras 13,14.

A factor that may be considered when determining the ROI is its recent history. Most of the time, the ROI will move around more or less continuously. Abrupt discontinuities may be the result of a hard long-distance shot, but considering that the video stream at the cameras 11,12 is recorded at for example a minimum of 25 frames per second, this will happen in a relatively small fraction of the frame transitions. The speed at which a 'high-temperature' zone in the heat-map moves across the field may, for example, be used as a parameter to weigh the areas of the heat map.

The system may thus collect a multitude of parameters from which to decide where to direct its attention (and its controllable cameras) to.

After the game - or in real time as the game evolves - the camera system may discard any video fragments of dead time and lulls in the game, based upon the same parameters that allowed it to determine the successive ROIs. But, for example, the relative calm that precedes a corner shot is quite different in nature from the lull of the ball being played around with the intention of slowing down the game.

The camera system may follow each player in space and time and compute the derivatives speed and acceleration of the players. These parameters of the individual players may provide an indication of the most interesting moments in the game and dead time. Alternatively or additionally other parameters may be used for the selection of ROIs, examples of which are given below.

For the purposes of training and coaching, however, strategic positioning on the field during dead time may be a relevant subject of study, in which case a determination of speeds below a threshold value may be indicative of the ROIs.

An autonomous editing process for generating video summaries may yield video fragments of unequal length that are stitched together. The individual fragments may be set to have a minimum duration to be meaningful for analysis or inclusion in the video summary.

The camera system may keep track of the score by reading and interpreting the scoreboard. The camera system preferably uses only the cameras to read the scoreboard, without any data transmission device or physical modification to the scoreboard. The camera system may use this information for example to mark the moments previous to any change on the scoreboard as particularly interesting and include them in the video summary. In another example the camera system may use this information to determine the start and/or the end of the game for starting and/or stopping the generation of the video summary.

The system may carry out all of the above tasks in real time. Due to the fast paced nature of the game, this calls for very fast data processing algorithms and a priori knowledge of the game.

Hereto a computer implemented video analyzer may use computer vision software libraries for image and pattern recognition in the video stream and for the generation of parameters describing the players on the field in terms of e.g. motion of the one or more players, a position on the playing field of the one or more players, a distance to the camera 11,12 of the one or more players, a velocity of the one or more players, a direction of movement of the one or more players, an acceleration of the one or more players, and/or a direction in which the one or more players are facing.

The computer vision software libraries may be based on OpenCV or any other computer vision software. OpenCV (Open Source Computer Vision library), for example, is an open source computer vision and machine learning software library of programming functions suitable for real-time computer vision. The library has more than 2500 optimized algorithms, which includes a comprehensive set of both classic and state-of-the-art computer vision and machine learning algorithms. These algorithms can be used to detect and recognize faces, identify objects, classify human actions in videos, track camera movements, track moving objects, extract 3D models of objects, produce 3D point clouds from stereo cameras, stitch images together to produce a high resolution image of an entire scene, find similar images from an image database, remove red eyes from images taken using flash, follow eye movements, recognize scenery and establish markers to overlay it with augmented reality, etc.

Additionally or alternatively other software libraries may be used, such as ffmpeg, Qt and openGL.

Alternatively the computer implemented video analyzer may use a video encoder, such as a H.264 encoder, for the generation of parameters describing the players on the field in terms of e.g. motion of the one or more players, a position on the playing field of the one or more players, a distance to the camera 11,12 of the one or more players, a velocity of the one or more players, a direction of movement of the one or more players, and/or an acceleration of the one or more players.

In the process of encoding a raw video stream into an encoded data stream, such as a H.264 or VP8 stream, the encoder analyzes successive video frames in the raw video stream to find ways to compress the video data. For example parts of successive frames that do not change need not be repeated in the encoded video stream. Information about the whereabouts of the non-changed parts (or the changed parts) in a video frame may be used as a parameter indicating a movement on the playing field. Another example from H.264 is the definition of motion vectors that indicate or predict a movement in terms of direction and distance of a set of pixels or pixel area in a video frame to thereby define a successive video frame. Information from the motion vector may be used as a parameter indicating movement on the playing field. Similarly, other information from the video encoder may be used as parameters.

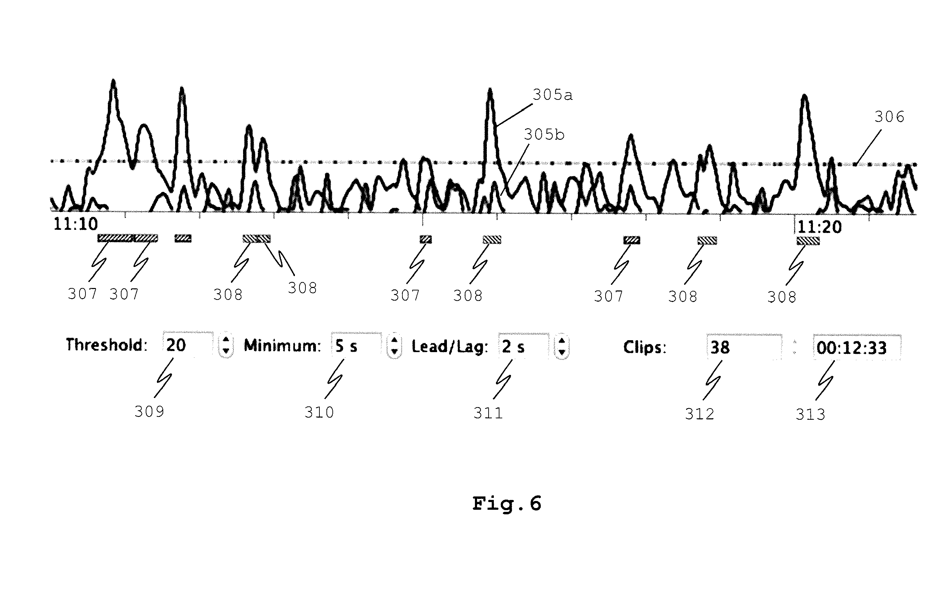

A computer implemented parameter analyzer analyzes the parameters by applying computational rules to the parameters. The computational rules may include a threshold value for selecting parameters above the threshold value, such as shown in the example of Fig.6. Additionally the computational rules may include another threshold value for selecting parameters below this threshold value, a lead time value for setting the start of a selected video fragment back in time by the lead time value, and/or a duration time value for setting a minimum length of a selected video fragment.

The video analyzer and parameter analyzer may be implemented on a single computer system, on separate computer systems or in a cloud computing environment.

Fig.6 depicts a graphical representation of a selection of interesting moments in video streams from two cameras 11,12. In this example a first camera 11 covers a first area 11a of a playing field 100 and a second camera 12 covers a second area 12a of the playing field 100.

Each resulting video stream is processed by a video analyzer. OpenCV may be used to first detect movements on the playing field by comparing successive video frames in the video stream. The result is typically a coarse indication of video frame areas with detected motion. Different frame areas with detected motion may belong to a single object, such as a player. To combine multiple areas that have a high probability that they are part of a single object, another OpenCV function may be used to merge and smoothen the detected areas, resulting in larger and smoother areas of detected motion. These video frame areas may be boxed by yet another OpenCV function, resulting in boxed areas of detected motion such as visualized in Fig.4. The parameters characterizing the boxed areas, such as pixel dimensions and/or direction of movement, are typically output from the video analyzer and input a parameter analyzer.

The parameter analyzer may use the parameters of the boxed areas indicating a movement of players to determine ROIs in the video stream. In the example of Fig.6 the ROIs are related to parts of the video stream to be selected for the generation of a video summary. The parameter analyzer may use the pixel dimensions of the boxed areas in a video frame to determine a total area size (in pixels) of all boxed areas combined. A filter may be applied to e.g. select only boxed areas having a minimum dimension of 500 pixels and a maximum dimension of 3000 pixels. In a full-HD video frame such filter effectively focusses on boxed areas related to players on the field. The thus calculated total area sized of the selected boxed areas is given a relative value in between 0 and 100, being the relative area size compared to the full frame size. For each of the cameras 11,12 this relative area size of selected boxed areas in a video frame may be time stamped with an absolute time of recording or relative time in the video stream.

When the cameras 11,12 are placed behind the goals, the total area size of the selected boxed areas provides an indication of player activity in front of a goal. If many players are close to a goal, i.e. close to a camera 11,12, then the total boxed area size will be large. If there are no players in front of a goal, then the total area size will be small. This information may thus be used to determine the ROIs.

In fig.6 the relative area size of selected boxed areas is visualized as a first graph 305a related to the first camera 11 and a second graph 305b related to the second camera 12. The values are plotted in time, based on the time stamps. In Fig.6 the time is plotted along the horizontal axis, with exemplary indications of absolute times 11:10 and 11:20. A threshold value 306 may be set to select parts of the video streams from the cameras 11,12, e.g. by selecting when the relative boxed area size of the selected boxed areas is larger than the threshold value. When the relative boxed area size related to the first camera 11 (graph 305a) is larger than the threshold value, this is indicated along the time axis by bars 307. When the relative boxed area size related to the second camera 12 (graph 305b) is larger than the threshold value, this is indicated along the time axis by bars 308. The time stamps falling within the bars 307,308 may be stored as selection data and indicate the ROIs, i.e. the parts of the video frames to be used in the summary video. The time stamps may be stored as begin time and end time of each ROI, together with an indication of the video stream from which the ROI is selected.

The parameter analyzer typically operates without a user interface. To configure the parameter analyzer a graphical user interface may be used, which may be as shown in Fig.6. The graphs 305a,305b and the threshold line 306 are then presented on a display connected to the parameter analyzer. Also the selected time frames, indicated by the bars 307,308, may be presented on the display. User input objects 309-311 may be part of the user interface. The threshold value may be changed using threshold input object 309. A minimum length of bars 307,308 may be set using input object 310. The minimum length may be used to filter out ROIs, in this example having a length shorter than 5 seconds. A lead/lag value may be set using input object 311. The lead/lag value may be used to add time, in this example 2 seconds, before each bar 307,308, hereby effectively setting the start time of the ROIs 2 seconds before the actual ROI. Depending on the settings of user input objects 309-311 the video summary may have a number of ROIs indicated by output object 312 (i.e. the number of clips in the video summary corresponds to the number of selected ROIs). In this example 38 ROIs are selected in total. The total length of the video summary is presented in output object 313. In this example the video summary will be 12 minutes and 33 seconds long.

Occasionally, there may be regions of interest that fall outside the bounds of normal play, such as conflicts. To facilitate a post-mortem breakdown of a conflict, the camera system may be configured to spot such incidents although they may take place away from the ball. Here, as in the event of a goal, the significance of an event may become evident after it has occurred. The camera system may be configured to recall image streams from just before the event and add these to the summary.

The camera system may be adaptable to other contexts, such as to other team sports. Examples hereof are football, rugby and water polo. Hereto the camera system may be calibrated onto another area of play (the playing field or basin), game-specific rule set may be loaded into the video analyzer and game-specific computational rules may be loaded into the parameter analyzer.

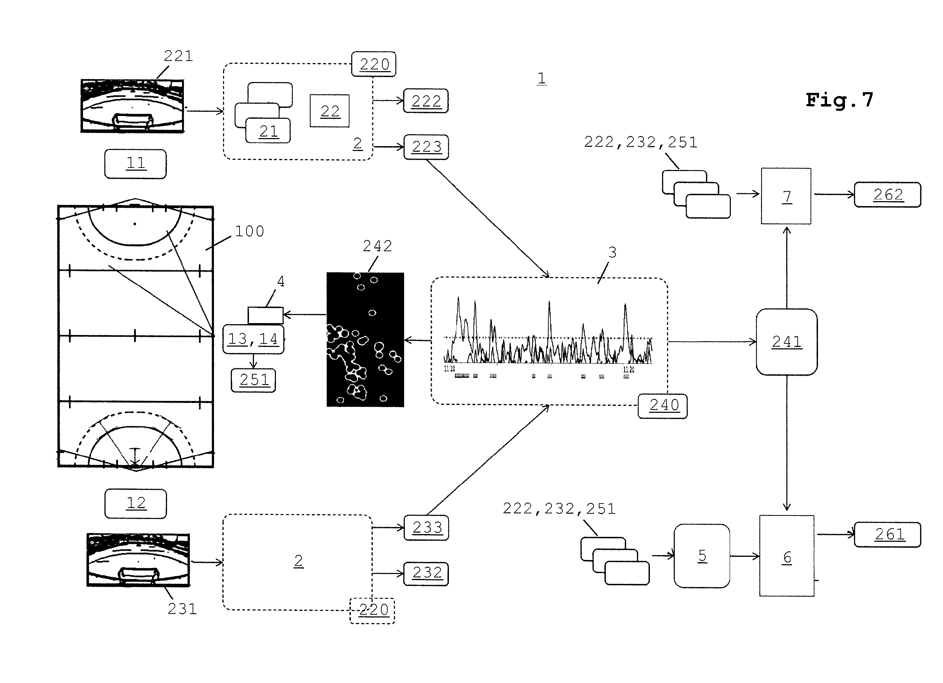

A complete overview of an exemplary camera system 1 is shown in Fig.7. The playing field 100 is captured by cameras 11 and 12. Video stream 221 from camera 11 is input to video analyzer 2. The video analyzer 2 uses one or more computer vision software libraries 21, which are configured with a game-specific rule set 220 typically stored in a memory, to recognize and track players on the playing field 100. An internal clock module 22 may be used to time-tag the analysis results and the video stream. A time-tagged video stream 222 may be output and the derived parameters 223, possibly time-tagged, are output to the parameter analyzer 3. Similarly video stream 231 from the other camera 12 is input to the video analyzer 2. From this video stream 231 a time-tagged video stream 232 may be output and the derived parameters, possibly time-tagged, are output as parameter data 223 to the parameter analyzer 3.

The parameter analyzer 3 uses the computational rules 240 on the parameter data, which are typically stored in a memory, to obtain selection data 241 indicative of one or more ROIs on the playing field or in the raw video streams 221,231. Alternatively or additionally a heat-map 242 may be generated in a similar manner indicative of one or more ROIs. Alternatively the heat-map may be created from the selection data 241.

The selection data and/or the heat-map may provide information about a ROI on the playing field, which may be used by a camera controller 4 to control a controllable camera 13,14. The controllable camera 13,14 outputs a video stream 251.

The selection data may provide information about a ROI in the raw video stream 221,231. A computer-implemented video fragment selector 6 may use the selection data to select video fragments from the time-tagged video steams 222 and 232 and the video stream 251, which is also typically time-tagged. The selected video fragments are output as a video summary 261. The video summary 261 may be stored for later reference. The video fragment selector 6 may operate on the video streams 222,232,251 in real-time. Alternatively the video streams 222,232,251 are stored in a video storage 5 prior to the generation of the video summary.

A computer-implemented video selector 7 may switch between the video streams 222,232,251 based on the selection data to generate a live video stream 262. The thus created live video stream 262 may be shown as a live television program. The live video stream 262 may be stored for later use.

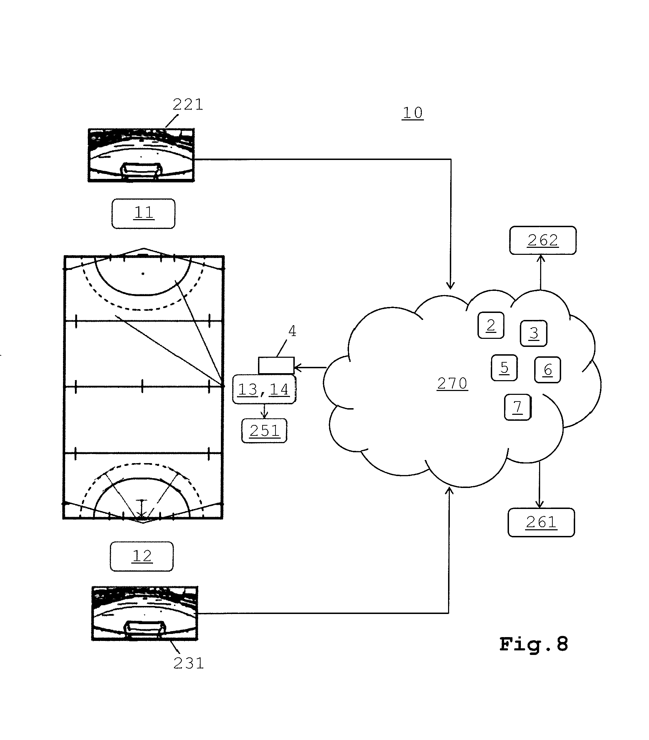

The functionality of the video analyzer 2, parameter analyzer 3, video storage 5, video fragment selector 6, and/or video selector 7 may be implemented in any external network, e.g. using cloud computing. With cloud computing the camera system 10 uses a cloud service at a cloud service provider, as depicted in Fig.8.

Generally, a cloud service is a service that is delivered and consumed on demand at any time, through any access network, using any connected devices using cloud computing technologies. A cloud service user (CSU) is a person or organization that consumes delivered cloud services. A CSU can include intermediate users that will deliver cloud services provided by a cloud service provider (CSP) to actual users of the cloud service, i.e. end users. End users can be persons, machines, or applications. Cloud computing is a model for enabling service users to have on-demand network access to a shared pool of configurable computing resources (e.g. networks, servers, storage, applications and services), that can typically be provisioned and released with minimal management effort or service-provider interaction. Cloud computing enables the cloud services. It is considered from a telecommunication perspective that users are not buying physical resources but cloud services that are enabled by cloud computing environments.

Cloud infrastructure as a service (IaaS) is a category of cloud services where the capability provided by the cloud service provider to the cloud service user is to provision virtual processing, storage, intra-cloud network connectivity services (e.g. VLAN, firewall, load balancer and application acceleration), and other fundamental computing resources of the cloud infrastructure where the cloud service user is able to deploy and run arbitrary application. In the exemplary embodiment of Fig.8 the camera system 10 uses a cloud IaaS, as depicted by the cloud 270.

The cloud IaaS 270 may be distributed over multiple cloud service providers. The functionality of the video analyzer 2, parameter analyzer 3, video storage 5, video fragment selector 6, and/or video selector 7 may be implemented at different cloud service providers. Inter-cloud computing allows on-demand assignment of cloud resources, including computing, storage and network, and the transfer of workload through interworking of cloud systems, possibly of different cloud service providers. From the viewpoint of a CSP, inter-cloud computing can be implemented in different manners, including inter-cloud peering, inter-cloud service broker and inter-cloud federation. These manners correspond to distinct possible roles that a CSP can play when interacting with other CSPs. Inter-cloud peering provides direct inter-connection between two CSPs. An inter-cloud service broker (ISB) provides indirect interconnection between two (or more) CSPs achieved through an interconnecting CSP which, in addition to providing interworking service functions between the interconnected CSPs, also provides brokering service functions for one (or more) of the interconnected CSPs. ISB also covers the case in which one (or more) of the interconnected entities receiving the brokering service is a cloud service user (CSU). Brokering service functions generally includes but is not limited to, the following three categories: service intermediation, service aggregation and service arbitrage. Inter-cloud federation is a manner to implement inter-cloud computing in which mutually trusted clouds logically join together by integrating their resources. Inter-cloud federation allows a CSP to dynamically outsource resources to other CSPs in response to demand variations.

The video analyzer 2 and the parameter analyzer 3 may be implemented as one or more computer systems. Furthermore, the video storage 5, the video fragment selector 6, and/or the video selector 7 may be implemented as one or more computer systems, possibly integrated with the video analyzer 2 and/or the parameter analyzer 3. A computer system may comprise any microprocessor configuration, such as a single processor or multi-processor configuration. The processor(s) may be single core, multicore or hyper threating. For optimal performance it may be preferred to use a multi-processor system with multi-core processors.

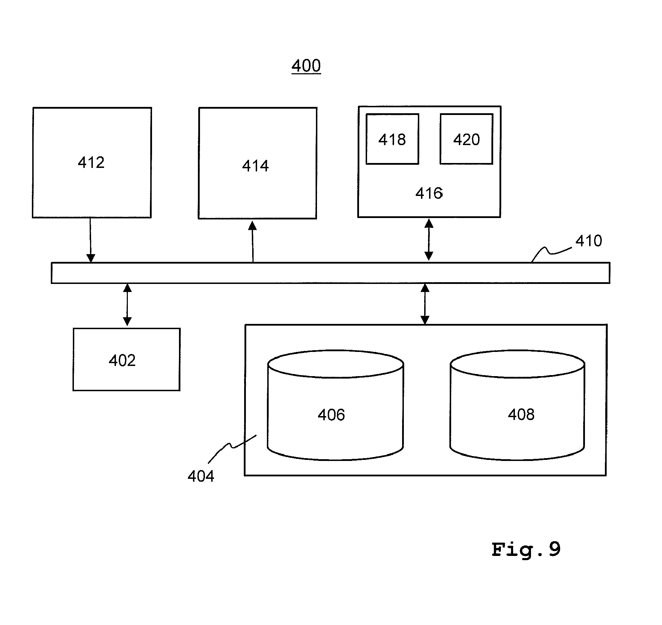

FIG.9 shows a block diagram illustrating an exemplary computer system 400, according to one embodiment of the present disclosure. The computer system 400 may be used to provide video analyzer 2, parameter analyzer 3, video storage 5, video fragment selector 6, and/or video selector 7.

Computer system 400 may include at least one processor 402 coupled to memory elements 404 through a system bus 410. The processor 402 typically comprises a circuitry and may be implemented as a microprocessor. As such, the computer system may store program code within memory elements 404. Further, processor 402 may execute the program code accessed from memory elements 404 via system bus 410. In one aspect, computer system 400 may be implemented as a computer that is suitable for storing and/or executing program code. It should be appreciated, however, that system 400 may be implemented in the form of any system including a processor and memory that is capable of performing the functions described within this specification.

Memory elements 404 may include one or more physical memory devices such as, for example, local memory 406 and one or more bulk storage devices 408. Local memory may refer to random access memory or other non-persistent memory device(s) generally used during actual execution of the program code. A bulk storage device may be implemented as a hard drive or other persistent data storage device. The computer system 400 may also include one or more cache memories (not shown) that provide temporary storage of at least some program code in order to reduce the number of times program code must be retrieved from bulk storage device 408 during execution.

Input/output (I/O) devices depicted as input device 412 and output device 414 optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to computer system 400 either directly or through intervening I/O controllers. A network adapter 416 may also be coupled to computer system 400 to enable it to become coupled to other systems, computer systems, remote network devices, and/or remote storage devices through intervening private or public networks. The network adapter may, in particular, comprise a data receiver 418 for receiving data that is transmitted by said systems, devices and/or networks to said data and a data transmitter 420 for transmitting data to said systems, devices and/or networks. Modems, cable modems, and Ethernet cards are examples of different types of network adapter that may be used with computer system 400.

The memory elements 404 may store an application (not shown). It should be appreciated that computer system 400 may further execute an operating system (not shown) that can facilitate execution of the application. Application, being implemented in the form of executable program code, can be executed by computer system 400, e.g., by processor 402. Responsive to executing application, computer system 400 may be configured to perform one or more of the operations of the video analyzer 2, parameter analyzer 3, video storage 5, video fragment selector 6, and/or video selector 7.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory or flash memory) on which alterable information is stored. Moreover, the invention is not limited to the embodiments described above, which may be varied within the scope of the accompanying claims.

## Claims

1. An autonomous camera system for generating a video of a sporting event at a playing field, the system comprising:
at least one camera, such as a wide-angle camera, configured to capture at least a part of the playing field and output a raw video stream of the video captured playing field;
a video analyzer comprising a first processor configured to recognize and track an area of activity on the playing field by analyzing the raw video stream and to derive one or more parameters from the tracking of the activity to obtain parameter data; and
a parameter analyzer comprising a second processor configured to filter the parameter data based on one or more predefined computational rules to obtain selection data indicative of one or more regions of interest on the playing field or in the raw video stream.

2. The system according to claim 1, wherein the video analyzer comprises a memory for storing one or more computer vision software libraries, and wherein the first processor is configured to use the one or more computer vision software libraries to derive the one or more parameters.

3. The system according to claim 1 or claim 2,
wherein the video analyzer comprises a video encoder, such as a H.264 or VP8 encoder, and wherein the video encoder is configured to derive the one or more parameters.

4. The system according to any one of the claims 1-3, wherein the video analyzer and/or the parameter analyzer are implemented at least partly in an external network, such as a cloud infrastructure as a service.

5. The system according to any one of the preceding claims, wherein the one or more parameters provide an indication of at least one of: a motion of one or more players on the playing field; a position on the playing field of the one or more players; a distance to the camera of the one or more players; a velocity of the one or more players; a direction of movement of the one or more players; an acceleration of the one or more players; a direction in which the one or more players are facing; and an amount of visible playing field.

6. The system according to any one of the preceding claims, further comprising:
at least one microphone to capture a sound from the playing field and output a raw audio stream of the captured sound; and
an audio analyzer comprising a third processor configured to recognize one or more predefined events by analyzing the raw audio stream and to derive one or more further parameters from the recognition of the predefined events to obtain further parameter data,
and wherein the second processor of the parameter analyzer is further configured to filter the further parameter data based on a further predefined computational rule to obtain further selection data indicative of one or more regions of interest.

7. The system according to claim 6, wherein the one or more further parameters provide an indication of at least one of: an occurrence of a referee signal, such as a referee whistle; an occurrence of clapping and/or cheering from audience; and an intensity of clapping and/or cheering from audience.

8. The system according to any one of the preceding claims, wherein the computational rule comprises at least one of: a first threshold value for selecting parameters above the first threshold value, possibly including the first threshold value; a second threshold value for selecting parameters below the second threshold value, possibly including the second threshold value; a lead time value for selecting a start time value based on a current time value subtracted with the lead-lag time value, wherein the start time value is indicative of a start time position of a fragment of the raw video stream; and a duration time value for selecting an end time value based on a current time value added with the duration time value, wherein the end time value is indicative of an end time position of a fragment of the raw video stream.

9. The system according to any one of the preceding claims, wherein the one or more parameters in the parameter data are time-tagged and wherein the selection data is time-tagged, the system further comprising a data storage for storing the parameter data and/or the selection data.

10. The system according to any one of the preceding claims, wherein the region of interest is related to a time position in the raw video stream, the system further comprising a video fragment selector configured to output one or more fragments of the raw video based on the selection data.

11. The system according to claim 10, further comprising a video storage for storing the raw video stream, and wherein the video fragment selector is configured to use the stored raw video stream as a source for the one or more fragments.

12. The system according to claim 10 or 11, wherein the system comprises two or more cameras each configured to output a raw video stream, and wherein the video fragment selector is configured to output video fragments from each of the raw video streams such that the video fragments are selected from no more than one camera at a time-tagged moment.

13. The system according to any one of the preceding claims, wherein the region of interest is related to a position on the playing field, the system further comprising a camera controller configured to control a controllable camera, such as a point-tilt-zoom camera, based on the selection data, and wherein the controllable camera is configured to output a further video stream.

14. The system according to claim 13, wherein the parameter analyzer is configured to use the selection data to generate a heat map indicative of a density of players at different locations of the playing field and wherein the camera controller is configured to control the controllable camera based on the heat map.

15. The system according to any one of the preceding claims, wherein the video analyzer is configured to detect a start and/or an end of the sporting event as triggers to start and/or stop the deriving of the parameters.

16. A computer-implemented method for generating a video of a sporting event at a playing field using an autonomous camera system, the method comprising:
capturing at least a part of the playing field using at least one camera, such as a wide-angle camera, and outputting a raw video stream of the video captured playing field;
recognizing and tracking an area of activity on the playing field, using a first processor or a video encoder of a video analyzer, by analyzing the raw video stream;
deriving, by the first processor, one or more parameters from the tracking of the activity to obtain parameter data; and
filtering the parameter data, using a second processor of a parameter analyzer, based on one or more predefined computational rules to obtain selection data indicative of one or more regions of interest on the playing field or in the raw video stream.

17. The method according to claim 16, wherein the region of interest is related to a time position in the raw video stream, the method further comprising outputting, using a video fragment selector, one or more fragments of the raw video based on the selection data.

18. The system according to claim 16 or 17, wherein the region of interest is related to a position on the playing field, the method further comprising controlling a controllable camera, using a camera controller, based on the selection data, and outputting a further video stream from the controllable camera.

19. The method according to claim 18, comprising using the selection data in the parameter analyzer to generate a mathematical heat map indicative of a density of players at different locations of the playing field and controlling the controllable camera based on the heat map.

20. The method according to any one of the claims 16-19, further comprising detecting, using the video analyzer, a start and/or an end of the sporting event as triggers to start and/or stop the deriving of the parameters.

21. A playing field comprising an autonomous camera system according to any one of the claims 1-15.

22. The playing field according to claim 21,
wherein the camera is positioned behind a goal on the playing field.
